# EUROPÄISCHE PATENTSCHRIFT

(11) **EP 1 462 393 B1**
(45) Veröffentlichungstag und Bekanntmachung des Hinweises auf die Patenterteilung: **02.08.2006**
(21) Anmeldenummer: 04006840.5
(22) Anmeldetag: 22.03.2004
(51) Int. Cl.: B65G 1/137

(54) **Automatisiertes System und Verfahren zum Lagern und Kommissionieren von Artikeln**
Automatic device and method for storing and commissioning articles
Dispositif et procédé automatique pour le stockage et la préparation d'articles

(30) Priorität: 26.03.2003 DE 10313577
(43) Veröffentlichungstag der Anmeldung: 29.09.2004
(60) Teilanmeldung: 06113966.3
(73) Patentinhaber: WITRON Logistik & Informatik GmbH, 92711 Parkstein (DE)
(72) Erfinder: Winkler, Walter, 92711 Parkstein (DE)
(74) Vertreter: Betten & Resch

(56) Entgegenhaltungen:
- EP-A- 1 211 198
- GB-A- 2 265 893
- US-A- 4 850 783
- US-A- 5 733 098
- US-B1- 6 450 751

## Beschreibung

### Gebiet der Erfindung

Die Erfindung betrifft ein Lagersystem und ein Lagerverfahren zum Lagern und Kommissionieren von Artikeln, die beispielsweise auf Eingangs-Ladungsträgern wie etwa Paletten angeliefert werden und auf Auftrags-Ladungsträgern, die ebenfalls Paletten sein können, einem Kommissionierauftrag entsprechend wieder ausgeliefert werden.

### Technologischer Hintergrund

Bei der Entwicklung von Logistiksystemen geht die Entwicklung hin zu immer stärkerer Automatisierung, um Kosten und Zeit zu sparen und die Wirtschaftlichkeit der Systeme zu erhöhen. Es ist daher bekannt, zum Einlagern beispielsweise in ein Hochregallager oder zum Auslagern aus diesem automatisierte und rechnergesteuerte Regalfahrzeuge zu verwenden. Ein für die Leistungsfähigkeit des Gesamtsystems entscheidender Vorgang stellt dabei der Kommissioniervorgang dar, d.h. die Zusammenstellung der Waren für einen Auslieferungsauftrag, beispielsweise die Zusammenstellung einer Teilelieferung eines Zulieferbetriebs an einen PKW-Hersteller oder von Auftragspaletten mit Waren für die Filialen einer Supermarktkette.

Im Stand der Technik wird der Kommissioniervorgang auch bei insgesamt hochautomatisierten Lagersystemen im Kern noch manuell durch einen Kommissionierer oder Picker ausgeführt, der entweder in einem Regalfahrzeug stehend - elektronisch geführt - die Waren aus dem Hochregallager entnimmt oder diese aus einem Pickbereich festgelegter Breite (beispielsweise 8 bis 14 m) "pickt" oder aus einem Lagerbehälter in einen Auftragsbehälter umsetzt. Die manuelle Arbeit ist kostspielig, begrenzt die Wirtschaftlichkeit des Systems insgesamt und ist - insbesondere bei schweren Gegenständen - für den Kommissionierer mit Gesundheitsrisiken verbunden.

Aus der US 5,733,098 ist ein automatisiertes Auftragspicksystem bekannt, das einen Steuercomputer zum Empfang von Kundenbestellungen aufweist und diese in gefüllte Auftragspaletten mit verschiedenen Lagen von Artikeln für den Kunden herunterbricht. Die Artikel werden in Lagerstapeln umfassend jeweils gleichartige Güter gelagert und dort mittels Greifarmen entnommen, palettiert, umwickelt und entsprechend dem Kundenauftrag für den Kunden bereitgestellt.

### Gegenstand der Erfindung

Es ist daher eine Aufgabe der vorliegenden Erfindung, ein Regallager und ein automatisiertes Lager- und Kommissionierverfahren vorzuschlagen, welche die genannten Nachteile im Stand der Technik vermeiden und eine weitgehende Mechanisierung und Automatisierung des gesamten Lager- und Kommissioniervorgangs von der Einlagerung bis zur Auslieferung ermöglicht.

Gelöst wird die Aufgabe durch ein Regallager gemäβ Anspruch 1.

Das erfindungsgemäße Regallager erlaubt eine Automatisierung auch des Kommissioniervorgangs, wodurch man ohne Kommissionierer oder "Picker" auskommen kann. Dadurch wird es möglich, das Logistiksystem insgesamt noch stärker zu automatisieren und die Wirtschaftlichkeit zu erhöhen.

Im Tablarlager ist für jede Packeinheit vorzugsweise ein eigenes Tablar vorgesehen. Gemäß der Erfindung weisen die Tablare Öffnungen auf zum Durchgriff von Hubstiften zum Anheben einer Packeinheit von dem Tablar.

Erfindungsgemäß ist die Entnahme-Fördertechnik zur Entnahme der Packeinheiten in einer definierten Reihenfolge ausgebildet. Dazu kann die Entnahme-Fördertechnik eine Sortiereinrichtung bzw. Überholeinrichtung aufweisen. Weiterhin umfaßt die Entnahme-Fördertechnik vorzugsweise rechnergesteuerte Entnahme-Regalfahrzeuge.

Für unterschiedliche Artikelgrößen können Tablare unterschiedlicher Abmessungen verwendet werden, wobei vorzugsweise vordefinierte standardisierte Abmessungen gewählt werden, die von der Fördertechnik besser handhabbar sind.

Gemäß einer Variante weist die Beladungsstation eine automatisierte Beladesvorrichtung zum Laden der Packeinheiten auf einen Auftrags-Ladungsträger auf, wodurch der Automatisierungsgrad des Gesamtsystems weiter erhöht werden kann. Vorteilhaft sind jeder Beladevorrichtung vier Auslagerbahnen aus dem Tablarlager zugeordnet.

Um die Tablare und damit die Packeinheiten der Ladevorrichtung in definierter Position zuführen zu können, kann eine Tablar-Rütteleinrichtung zur Positionierung einer Packeinheit auf dem Tablar und eine Drehvorrichtung zum Drehen des Tablars mit der Packeinheit vorgesehen sein.

Zur Beladung von seitlich umschlossenen Ladungsträgern wie Kisten, Behältern oder Gitterboxen kann eine Ladungsträger-Kippeinrichtung vorgesehen sein, mit der der umschlossene Ladungsträger beispielsweise um 90 Grad nach vorne gekippt wird, so daß er mit der erfindungsgemäßen Beladevorrichtung "von oben" beladen werden kann. Entsprechend ist dann vor der Beladevorrichtung vorzugsweise eine Packeinheit-Kippeinrichtung vorgesehen, um die Packeinheiten entsprechend der bestimmten Beladungskonfiguration um 90 Grad zu kippen.

Das erfindungsgemäße Regallager ermöglicht so die Entnahme der gelagerten Artikel von den Tablaren durch "Herausheben" von unten her, ohne daß Greifarme oder dergleichen erforderlich sind. So kann eine Beschädigung der Artikel beim Herunterladen von dem Tablar vermieden werden.

Die Erfindung schlägt weiterhin ein Verfahren zum Lagern und Kommissionieren von Artikeln in einem Lager vor, welches Verfahren folgende Schritte aufweist (a) Vereinzelung der Artikel in Packeinheiten, (b) Umladen der Packeinheiten auf Tablare, (c) Lagerung der auf den Tablaren liegenden Packeinheiten in einem als Puffer dienenden Tablarlager, (d) Erfassung eines Kommissionierauftrags und der zur Abwicklung dieses benötigten Packeinheiten, (e) Auslagerung der für den Kommissionierauftrag benötigten Packeinheiten aus dem Tablarlager, (f) Sortieren der ausgelagerten Tablare in eine definierte Sequenz, und (g) Umladen der Packeinheiten auf Auftrags-Ladungsträger mit der durch die Sequenz bestimmten Beladereihenfolge für eine optimale Beladung hinsichtlich Volumen und/oder Stabilität des Ladestapels, wobei zur Lagerung im Tablarlager Tablare mit Durchgriffsöffnungen verwendet werden.

Das erfindungsgemäße Verfahren verwirklicht eine mannlose Kommissionierung der für einen Kommissionierauftrag benötigten Artikel aus dem als Puffer dienenden Tablarlager. Dadurch können die Leistungsfähigkeit und Wirtschaftlichkeit des Logistiksystems erhöht und die Logistikkosten gesenkt werden.

Erfindungsgemäß werden die Packeinheiten so aus dem Tablarlager ausgelagert, daß sie mit einer definierten Reihenfolge zur Verladeeinrichtung auf die Auftragspaletten zugeführt werden. Dadurch kann das Verfahren zur Beladung der Auftrags-Ladungsträger optimiert werden.

Gemäß einer Variante weist das Verfahren außerdem den Verfahrensschritt der Umwicklung des auf dem Auftrags-Ladungsträger gebildeten Ladungsstapels mit Sicherungsmitteln, beispielsweise einer Folie, zur Stabilisierung des Ladestapels auf.

Weitere Ausführungsformen der Erfindung ergeben sich aus den weiteren Unteransprüchen.

### Kurze Beschreibung der Zeichnungen

Die Erfindung wird im folgenden anhand von konkreten Ausführungsbeispielen unter Bezugnahme auf die beiliegenden Zeichnungen beschrieben.
- Fig. 1: ist eine schematische Aufsicht auf ein Lagersystem gemäß einem Ausführungsbeispiel der Erfindung.
- Fig. 2: ist eine Querschnittsansicht entlang der Linie II-II von Fig. 1.
- Fig. 3: zeigt schematisch wesentliche Verfahrensschritte eins Ausführungsbeispiels des erfindungsgemäßen Verfahrens.
- Fig. 4: zeigt schematisch in perspektivischer Ansicht ein Tablar mit Packeinheit, welche bei der Erfindung anwendbar sind.
- Fig. 5: zeigt schematisch die Stationen, welche eine Packeinheit aus dem Tablarlager bis zur Beladung auf den LKW durchläuft.
- Fig. 6: zeigt schematisch in Form eines Flußdiagramms die Verfahrensschritte eines Ausführungsbeispiels eines Verfahrens zum automatisierten Beladen eines Ladungsträgers.
- Fig. 7: zeigt schematisch in Form eines Flußdiagramms ein Ausführungsbeispiel eines Kommissionierverfahrens, welches bei der die vorliegenden Erfindung anwendbar ist.
- Fig. 8: zeigt schematisch ein Ausführungsbeispiel eines erfinderungsgemäßen Tablarlagers mit Beladevorrichtung sowie zugehöriger Fördertechnik.
- Fig. 9: zeigt schematisch die Funktionsweise eines Ausführungsbeispiels einer erfindungsgemäßen Tablar-Rütteleinrichtung.
- Fig. 10: ist eine schematische Perspektivansicht eines Ausführungsbeispiels einer Beladevorrichtung, welche im erfindungsgemäßen Lagersystem einsetzbar ist.
- Fig. 11: ist ein schematisches Sequenzdiagramm, welches den Beladevorgang mit der Vorrichtung von Fig. 10 zeigt.
- Fig. 12: ist eine Sequenz von schematischen Seitenansichten eines Ausführungsbeispiels der Beladevorrichtung von Fig. 10.
- Fig. 13: zeigt ein Ausführungsbeispiel einer Folienwickelvorrichtung, die im erfindungsgemäßen Lagersystem einsetzbar ist.

### Detaillierte Beschreibung von Ausführungsbeispielen

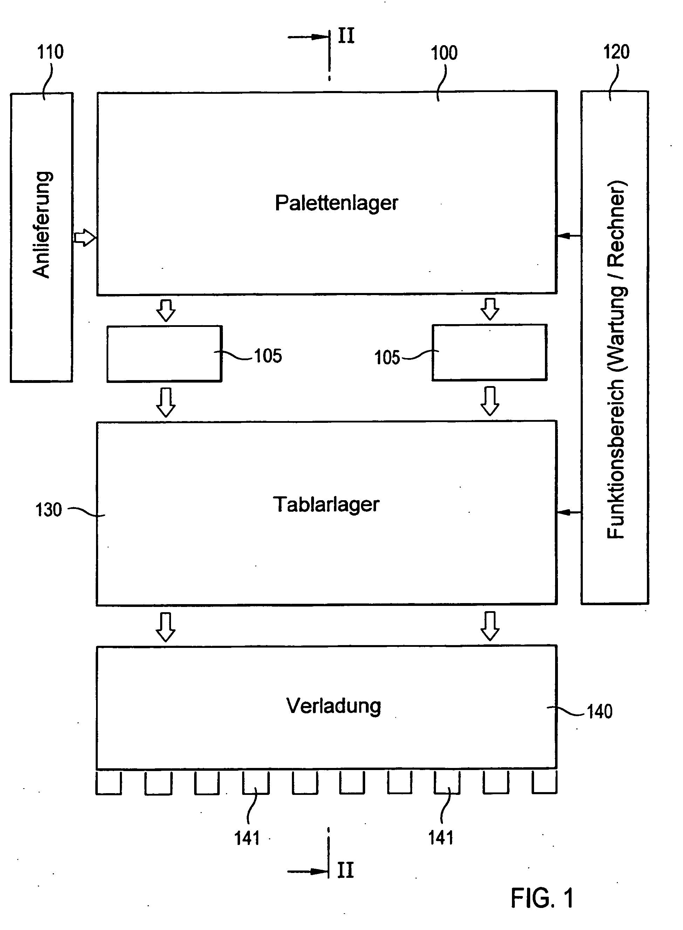

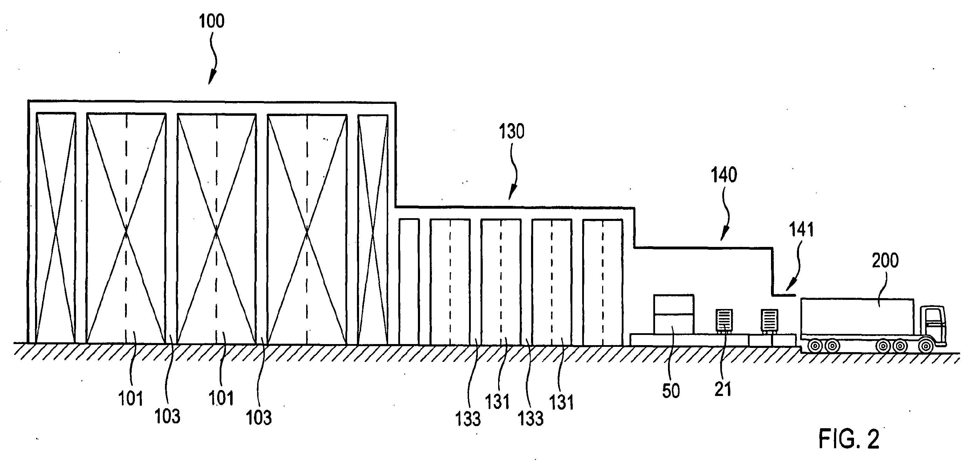

Fig. 1 zeigt in Aufsicht ein Ausführungsbeispiel einer erfindungsgemäßen Lagervorrichtung und Fig. 2 eine Querschnittsansicht entlang der Linie II-II aus Fig. 1.

Das Eingangslager 100 ist beispielsweise als Palettenlager ausgebildet, d.h. die an einer Anlieferungsstation 110 angelieferten Artikel oder Waren werden auf den Anlieferungspaletten in dem Palettenlager oder Eingangslager 100 in Regalreihen 101 gelagert. In den zwischen den Regalreihen 101 ausgebildeten Regalgassen 103 (siehe Fig. 2) sind auf an sich bekannte Art und Weise Regalfahrzeuge verfahrbar, die die angelieferten Lagerpaletten im Regallager einlagern. Mit dem Regallager über eine automatisierte Fördertechnik verbunden ist ein Tablarlager 130, das wiederum durch Regalgassen 133 getrennte Lagerregale 131 umfaßt, in denen die zu lagernden Artikel auf Tablaren oder Trays gelagert werden. Gemäß dem in Fig. 2 gezeigten Ausführungsbeispiel hat das Tablarlager 130 eine geringere Bauhöhe als das Palettenlager 100.

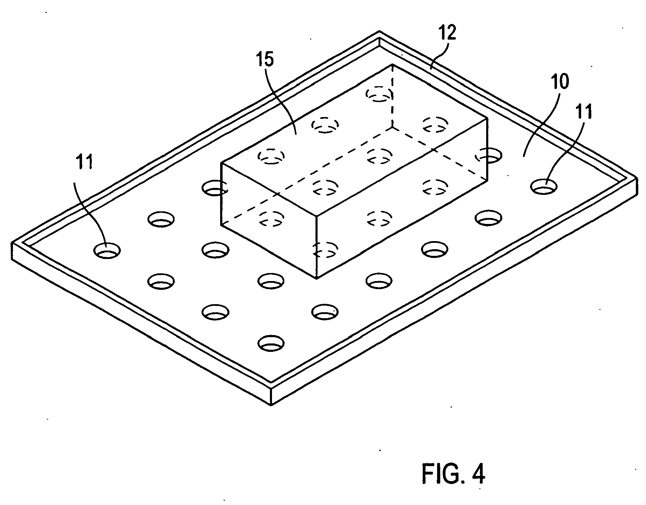

Fig. 4 zeigt schematisch ein Ausführungsbeispiel der in dem erfindungsgemäßen Tablarlager 130 verwendeten Tablare 10. Die Tablare sind im allgemeinen flach und tablettförmig ausgebildet und haben vorzugsweise einen umlaufenden Rand 12. Die Tablare können verschiedene Abmessungen je nach den zu lagernden Artikeln 15 haben. Vorzugsweise weisen die Tablare 10 in ihrem Boden Löcher oder Öffnungen 11 auf, die - wie später im einzelnen erläutert wird - den Durchgriff einer Hubeinrichtung zum Anheben eines auf dem Tablar gelagerten Artikels erlaubt. Vorzugsweise befindet sich auf jedem Tablar 10 genau ein Artikel 15, beispielsweise eine Packeinheit (Colli) zur Verladung auf eine Auftragspalette eines LKW 200.

Wie in Fig. 1 schematisch gestellt, ist zwischen Palettenlager 100 und Tablarlager 130 eine Depalettiereinrichtung 105 vorgesehen, mit der auf an sich bekannte Art und Weise die Eingangspalettenstapel automatisch mit Greif- und Saugmitteln in die den Palettenstapel bildendenden Packeinheiten vereinzelt. An das Palettenlager und das Tablarlager schließt sich ein Funktionsbereich 120 an, der Wartung und Reparatur dient sowie beispielsweise einen Lagerverwaltungsrechner enthalten kann. An das Tablarlager 130 schließt sich eine Verladungszone 140 an, die eine oder mehrere erfindungsgemäße Beladevorrichtungen 50 für Ladungsträger aufweist, auf denen Ladungsträger wie beispielsweise Auftragspaletten mit den für einen Kommissionierauftrag benötigten Packeinheiten 15 beladen werden. Die Ladungsträger mit fertiggestelltem Ladestapel 21 werden über eine LKW-Rampe 141 (siehe Fig. 2) ebenengleich in den LKW 200 geladen.

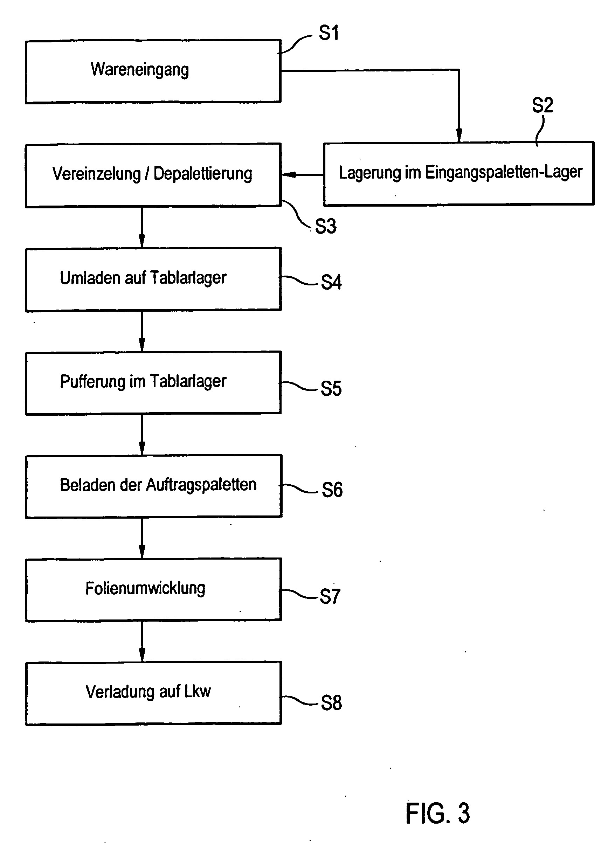

Ein Ausführungsbeispiel des erfindungsgemäßen Verfahrens ist schematisch in dem Flußdiagramm von Fig. 3 dargestellt. In einem ersten Schritt S1 werden die Waren an der Anlieferungsstation 110, beispielsweise mit LKW, angeliefert und dann mit der vorzugsweise automatisierten Fördertechnik im Palettenlager 100 eingelagert (Schritt S2). Das sich an das Palettenlager anschließende Tablarlager 130 dient als Puffer, so daß immer dann, wenn Artikel im Tablarlager 130 knapp werden, beispielsweise ein Vorrat von nur noch 24 Stunden oder 48 Stunden vorhanden ist, die Artikel aus dem Palettenlager 100 angefordert, aus den Paletten entnommen und in einem Schritt S3 mit der Depalettiereinrichtung 105 vereinzelt und anschließend einzeln auf die Tablare 10 geladen werden (Schritt S4). Mit einer geeigneten (nicht dargestellten) Fördertechnik werden die Artikel auf den in der Größe angepaßten Tablaren im Tablarlager 130 zwischengelagert oder gepuffert. Vorzugsweise werden kleinere Artikel auf kleinen Tablaren vierfach tief oder große Artikel auf größeren Tablaren zweifach tief in Tablar-Regalen gelagert.

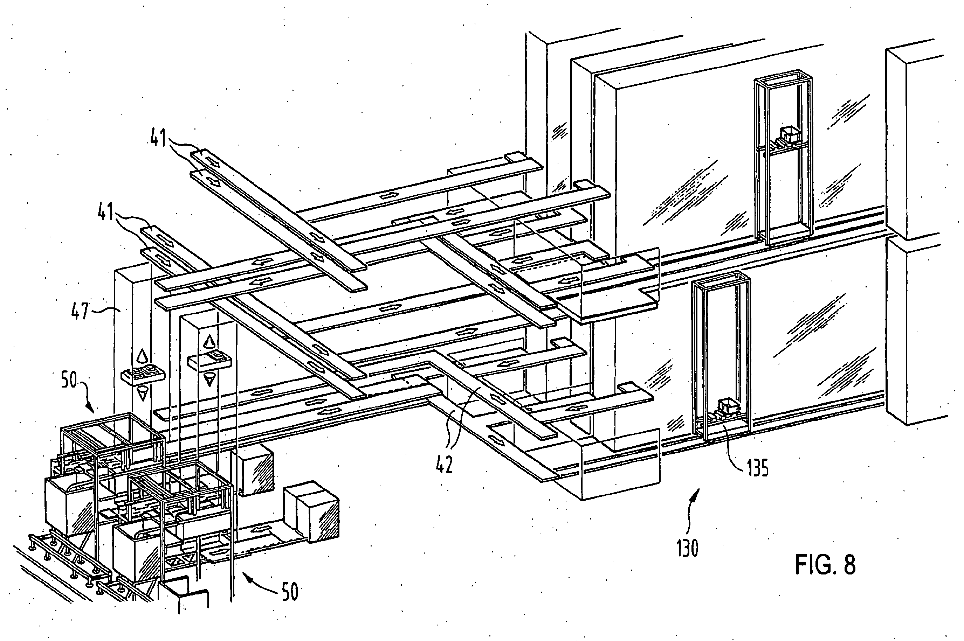

Sobald ein oder mehrere Kommissionieraufträge, d.h. Aufträge zur Zusammenstellung und Verladung einer Warenlieferung, beispielsweise für eine Einzelhandelsfiliale, erfaßt werden, werden die für den Kommissionierauftrag benötigten Artikel bzw. Packeinheiten über die automatisierte Fördertechnik (Regalfahrzeug 135, Auslagerbahnen 42, siehe Fig. 8) dem Tablarlager entnommen und in einer bestimmten Reihenfolge (wird später im Detail erläutert) der Verladungszone 140 zugeführt. Dort werden die Packeinheiten auf Auftragspaletten geladen (Schritt S6), die Ladestapel mit Folie umwickelt (Schritt S7) und schließlich auf LKW verladen (Schritt S8).

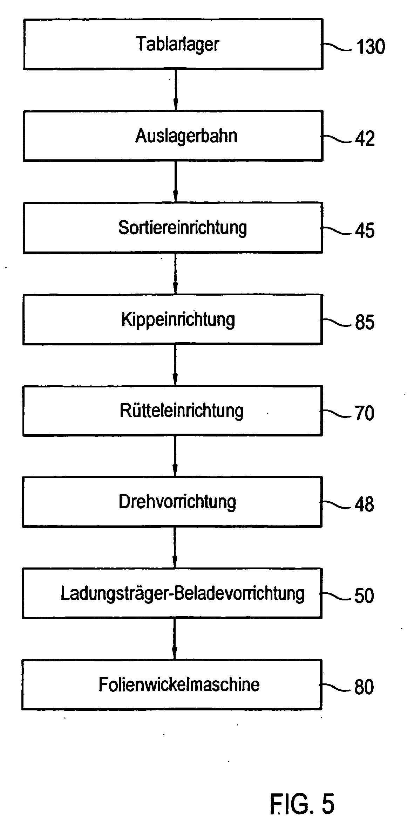

Die von den einzelnen Packeinheiten vom Tablarlager bis zur Verladung auf den LKW durchlaufenen Stationen sind im einzelnen schematisch in Fig. 5 dargestellt. Aus dem Tablarlager 130 werden die Packeinheiten mit geeigneten Regalfahrzeugen 135 entnommen (siehe Fig. 8) und an Auslagerbahnen 42, die als Endlosfördereinrichtungen ausgebildet sind, übergeben. Die Auslagerbahnen weisen vorzugsweise eine oder mehrere Sortiereinrichtungen 45 auf, die als Überholeinrichtungen mit einer mit zwei Weichen versehenen Parallelspur oder Ausweichspur der Auslagerbahn 42 ausgebildet sein können und einen Überholvorgang oder eine Änderung der Auslagersequenz zweier oder mehrerer dem Tablarlager entnommener Tablare ermöglichen.

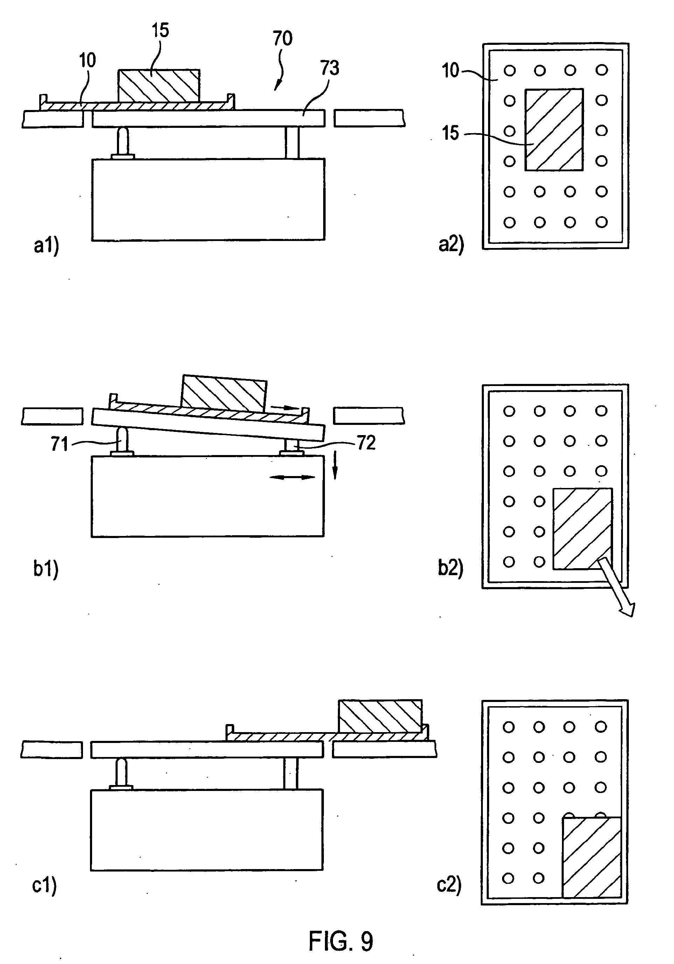

Anschließend kann eine Packeinheit-Kippeinrichtung 85 vorgesehen sein, um eine Packeinheit auf dem Tablar um 90 Grad zu kippen. Dazu können Hubstifte zum Anheben der Packeinheit und/oder geeignete Greifer benutzt werden. Daraufhin gelangt ein Tablar auf eine Tablar-Rütteleinrichtung 70, deren Funktionsweise unter Bezugnahme auf Fig. 9 später im Detail erläutert wird, wo die Packeinheit 15 bezüglich des Tablars 10 definiert, beispielsweise in einer Ecke des Tablars, positioniert werden kann. Daraufhin gelangt das Tablar mit Packeinheit zu einer Drehvorrichtung 48, auf der sich das Tablar um 90°, 180° oder 270° drehen läßt, um eine definierte Position bezüglich der anschließend folgenden Ladungsträger-Beladevorrichtung 50 einzunehmen. Dort werden die Packeinheiten auf einen Ladungsträger bzw. eine Auftragspalette 20 geladen und bilden einen Ladestapel 21, der mittels einer Folienwickelmaschine 80 zur Stabilisierung mit Folie umwickelt wird. Der so fertiggestellte Ladungsstapel auf der Palette kann dann auf einen LKW verladen und zum Lieferort, beispielsweise einer Einzelhandelsfiliale, transportiert werden.

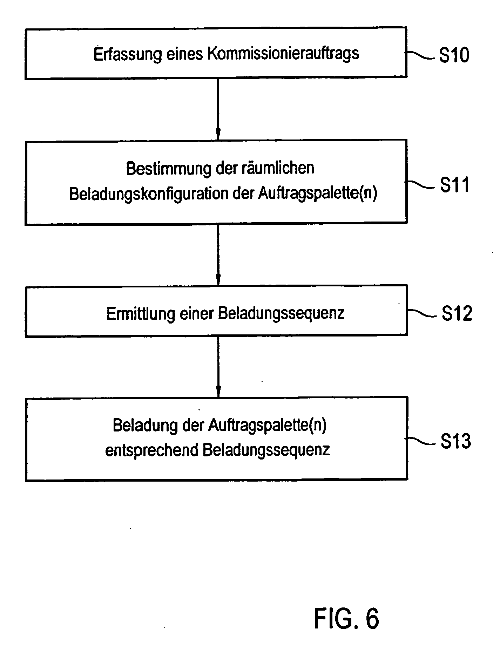

Das Diagramm von Fig. 6 zeigt schematisch die Verfahrensschritte zum automatischen Beladen eines Ladungsträgers mit einen Ladestapel bildenden Packeinheiten. Im ersten Schritt S10 wird durch den (nicht dargestellten) Lagerverwaltungsrechner ein Kommissionierauftrag erfaßt, der eine oder mehrere Ladungsträger (Paletten) 20 umfassen kann. Aufgrund der durch Identifizierungscodes identifizierten Artikel und deren gespeicherte Packungsgrößen wird in einem Verfahrensschritt S11 eine räumliche Ladungskonfiguration eines oder mehrerer Ladungsstapel auf der/den Auftragspaletten ermittelt. Dabei müssen verschiedenste Aspekte berücksichtigt werden. Einmal muß der fertiggestellte Ladestapel möglichst stabil und einfach transportfähig sein, d.h. schwere Artikel werden vorzugsweise im unteren Teil des Ladestapels und leichtere Artikel eher im oberen Teil des Ladestapels gelagert. Ebenso sind empfindlichere Artikel oder Packeinheiten im oberen Teil des Ladestapels besser untergebracht. Darüber hinaus sollte das Ladevolumen im Liefer-LKW möglichst gut genutzt werden, d.h. der Ladestapel möglichst dicht gepackt und möglichst hoch sein. Außerdem muß die Beladungskonfiguration so ausgebildet sein, daß es mit der automatischen Belademaschine möglich ist, den Ladestapel mit einer festgelegten Beladungssequenz, die im anschließenden Schritt S12 ermittelt wird, zu beladen. Im darauffolgenden Verfahrensschritt S13 wird die wenigstens eine Auftragspalette entsprechend der Beladungssequenz mit den Packeinheiten 15 gemäß der vorher bestimmten räumlichen Beladungskonfiguration beladen.

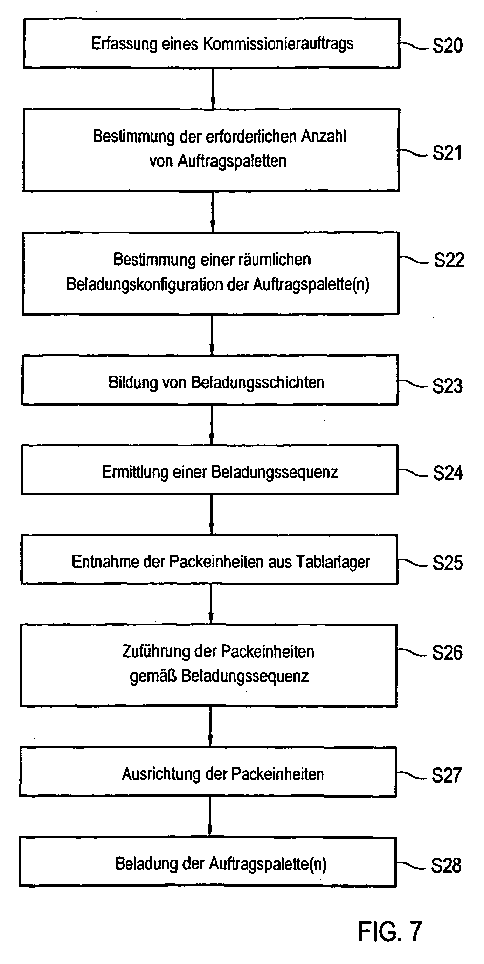

Ein weiteres Ausführungsbeispiel eines Beladeverfahrens wird unter Bezugnahme auf das Flußdiagramm von Fig. 7 nun im Detail beschrieben.

Im Verfahrensschritt S20 werden die einen Kommissionierauftrag bildenden Packeinheiten 15 erfaßt und in dem anschließenden Verfahrensschritt S21 wird die erforderliche Anzahl von Auftragspaletten aufgrund des gespeicherten Volumens und/oder des gespeicherten Gewichts der erfaßten Packeinheiten bestimmt. Dann wird, wie oben unter Bezugnahme auf Fig. 6 erläutert, eine räumliche Beladungskonfiguration des Ladestapels auf der Auftragspalette bzw. dem Ladungsträger 20 ermittelt, wobei verschiedene Randbedingungen wie die Stabilität des Ladestapels oder eine möglichst gute Volumenausnutzung zu berücksichtigen sind. Dabei ist es vorteilhaft, einzelne Beladungsschichten zu bilden (Schritt S23), die einzelne Packeinheiten jeweils ähnlicher Größe oder zumindest ähnlicher Höhe umfassen.

Basierend auf den Beladungsschichten wird im darauffolgenden Verfahrensschritt S24 eine Beladungssequenz oder Beladungsreihenfolge ermittelt, mit der der in Schritt S22 abgeleitete Ladestapel 21 von unten nach oben aufgebaut wird. Dabei wird auf einer Auftragspalette jede Beladungsschicht von hinten nach vorne und von links nach rechts oder von rechts nach links aufgebaut.

Nachdem die Beladungskonfiguration und Beladungssequenz des Ladestapels mittels Lagerverwaltungsrechners bestimmt wurden, werden die Packeinheiten aus dem Pufferlager bzw. Tablarlager auf Tablaren liegend entnommen und der Belademaschine 50 zugeführt. Dabei könnten die einzelnen Packeinheiten schon in der richtigen Reihenfolge (Beladungssequenz) aus dem Tablarlager entnommen werden oder mittels einer oder mehrerer Sortiereinrichtungen 45 in die richtige Reihenfolge gebracht werden (Schritt S26). Mittels einer Packeinheit-Kippeinrichtung 85 können die Packeinheiten durch geeignete Mittel wie etwa Stifte oder Greifer um 90 Grad, 180 Grad usw. gedreht und in der gedrehten Position wieder auf dem Tablar abgelegt werden. Anschließend werden Packeinheiten mittels einer Drehvorrichtung 48 und einer Tablar-Rütteleinrichtung 70 auf dem Tablar liegend ausgerichtet und gegebenenfalls über einen Aufzug 47 (siehe Fig. 8) der Beladevorrichtung 50 zugeführt, wo sie gemäß der Beladungssequenz an dem durch die räumliche (dreidimensionale) Beladungskonfiguration bestimmten Ort des Ladestapels auf dem Ladungsträger 20 angeordnet werden.

Die Tablar-Rütteleinrichtung, die dazu dient, einen Gegenstand oder eine Packeinheit 15 auf dem Tablar 10 auszurichten, wird im folgenden unter Bezugnahme auf Fig. 9 erläutert. Die Tablar-Rütteleinrichtung 70 umfaßt eine Kippauflage 71 sowie einen Hubkolben 72, der eine Auflageplatte 73 an der der Kippauflage 71 diagonal gegenüberliegenden Ecke unterstützt und durch eine Abwärtsbewegung des Hubkolbens eine diagonale Verkippung der Auflageplatte 73 und damit eines aufliegenden Tablars 10 hervorruft.

Der Vorgang der Ausrichtung der Packeinheit 15 auf dem Tablar 10 ist in Fig. 9 in der Bildsequenz a1) bis c1) in Seitenansicht und in der Bildsequenz a2) bis c2) in Aufsicht schematisch dargestellt. In Fig. 9a gelangt Tablar 10 mit aufliegender Packeinheit 15 von der Fördereinrichtung auf die Auflageplatte 73 der Tablar-Rütteleinrichtung 70. In Fig. 9b senkt sich der Hubkolben 72 unter gleichzeitigen horizontalen Rüttelbewegungen (um Reibungskräfte zu überwinden) nach unten, wodurch sich die Packeinheit 15 zur abgesenkten Ecke des Tablars 10 bewegt (siehe Pfeil in Fig. 9b2), wodurch die Packeinheit 15 auf dem Tablar ausgerichtet wird. Anschließend wird der Hubkolben wieder angehoben, so daß sich die Auflageplatte in Horizontalposition befindet und das Tablar 10 mit ausgerichteter Packeinheit 15 weiter befördert werden kann.

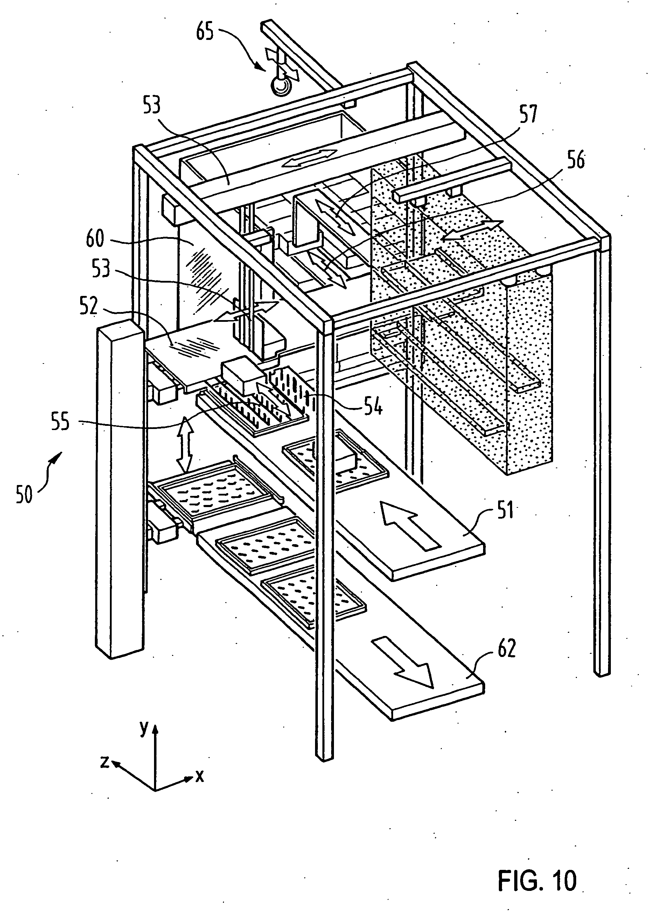

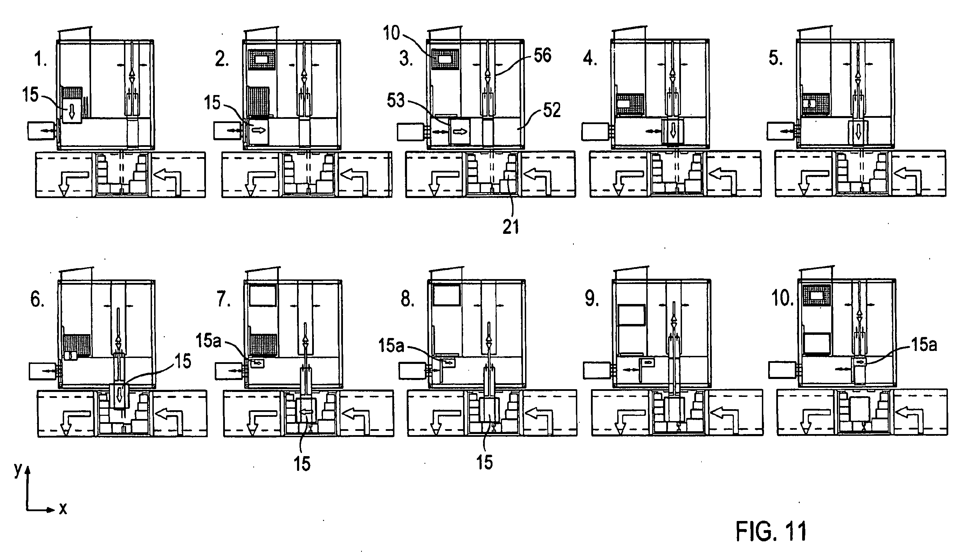

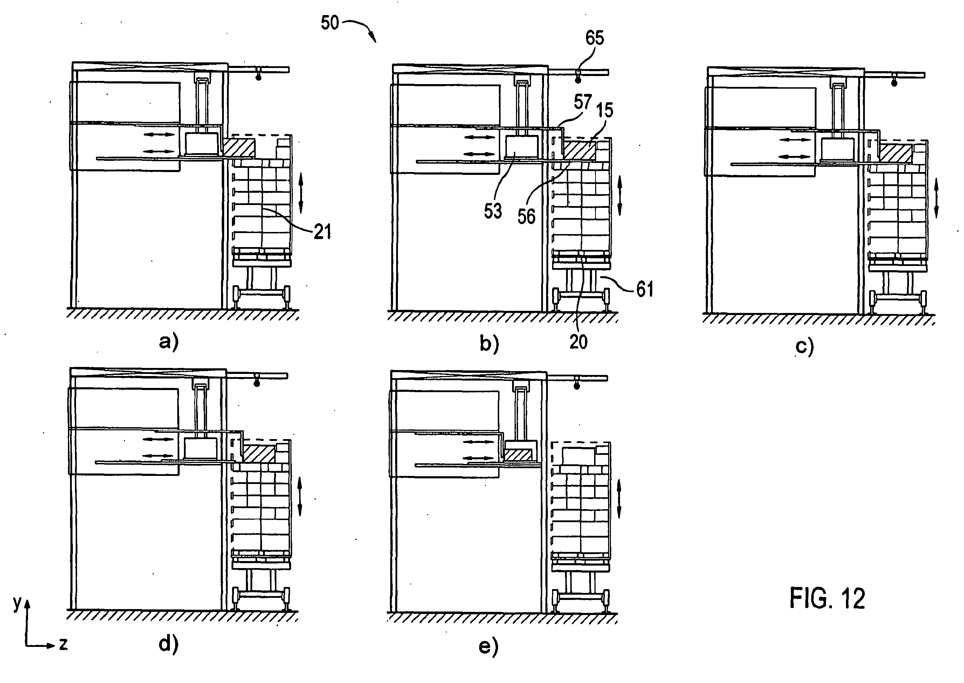

Ein Ausführungsbeispiel einer Ladungsträger-Beladungsvorrichtung 50 ist in Fig. 10 perspektivisch dargestellt. Die Funktionsweise dieses Ausführungsbeispiels wird weiterhin aufgrund der in den Fig. 11 und 12 gezeigten Ablaufdiagramme deutlich.

Die Tablare 10 mit jeweils darauf liegender Packeinheit 15 werden über einen Tablarförderer 51 der Beladungsvorrichtung 50 zugeführt. Am Ende des Tablarförderers 51 ergreifen Hubstifte 54 einer Hubeinrichtung die Packeinheit 15 durch die Öffnungen 11 im Tablar von unten und heben diese so aus dem Tablar 10 heraus. Daraufhin ergreift ein Rechen 55 die Packeinheit 15 und schiebt diese auf eine horizontale Ladeplatte 52. Die Hubstifte können dann wieder unter den Tablarförderer 51 abgesenkt werden, so daß das entleerte Tablar 10 über einen Tablar-Rückförderer 62 ins Tablarlager zurückbefördert werden kann. Die auf der Ladeplatte 52 liegende Packeinheit 15 wird mittels einer Verschiebeeinrichtung (Pusher) 53 in x-Richtung, d.h. in Richtung der Längsseite des Ladungsträgers 20 bis zu der vorgesehenen x-Position der Packeinheit in der Beladungskonfiguration des Ladestapels 21 bewegt. Dann wird die Packeinheit 15 mittels eines Abstreifers 57 auf eine in z-Richtung (Tiefenrichtung des Ladestapels) vorragende Beladezunge 56 geschoben und mittels dieser in z-Richtung bis zu der vorgesehenen z-Position der räumlichen Beladungskonfiguration des Ladestapels bewegt. Dann wird die Beladezunge 56 zurückgefahren, während der Abstreifer 57 zunächst in seiner Position verharrt, wodurch die Packeinheit 15 an der für diese vorgesehenen Position auf dem Ladestapel abgelegt wird. Anschließend werden Beladezunge und Abstreifer wieder zurückgefahren zur Aufnahme der nächsten Packeinheit. Um die beschriebene Beladungsaufgabe zu erfüllen, müssen Beladezunge und Abstreifer simultantan in x-Richtung und voneinander unabhängig in z-Richtung bewegbar sein.

Bei den Auftrags-Ladungsträgern handelt es sich beispielsweise um handelsübliche Paletten wie etwa sogenannte Euro-Paletten. Die Erfindung ist jedoch auch auf seitlich umschlossene Ladungsträger wie etwa Kisten, Behälter oder Gitterboxen anwendbar. Zur Beladung solcher umschlossener Ladungsträger mit der Beladevorrichtung ist eine (in den Figuren nicht dargestellte) Ladungsträger-Kippeinrichtung vorgesehen, die einen umschlossenen Ladungsträger um beispielsweise 90 Grad nach vorne kippt, so daß er quasi von oben her zugänglich ist und beladen werden kann. Mit Hilfe der oben erwähnten Packeinheit-Kippeinrichtung 85 können die Packeinheiten vor der Beladung in die entsprechende gekippte Position gebracht werden.

Der Beladevorgang wird im folgenden noch einmal im Detail unter Bezugnahme auf die Sequenzdarstellung in Aufsicht von Fig. 11 erläutert. In Darstellung 1. Ergreifen die Hubstifte 54 die auf dem Tablar 10 liegende Packeinheit 15, die dann durch den Rechen 55 auf die Ladeplatte 52 befördert wird. Dann wird die Packeinheit 15 durch die Verschiebeeinrichtung 53 in x-Richtung zu der Verladeposition verschoben (Darstellung 2. Und 3.). Ist die richtige x-Position erreicht (Darstellung 4.), wird die Packeinheit mit dem Abstreifer 57 auf die Ladezunge 56 geschoben (Darstellung 5.) und dann auf der Beladezunge 56 liegend in z-Richtung bis zu der vorgesehenen Position geschoben (Darstellung 6. Und 7.) und anschließend durch eine kleine Bewegung der Ladezunge in (in diesem Fall) negative x-Richtung an eine bereits in der Ladeebene vorhandene Packeinheit angedrückt (Darstellung 7.). Anschließend zieht sich die Beladezunge zurück, während der Abstreifer 57 zunächst in seiner Position bleibt (Darstellung 8.), wodurch die Packeinheit 15 an der für diese vorgesehenen Position abgelegt wird. Schließlich ziehen sich Ladezunge und Abstreifer beide zurück, so daß die nächste Packeinheit 15a positioniert werden kann.

Wie aus Darstellung 6. Hervorgeht, wird in dem Moment, wenn die erste Packeinheit 15 gerade mit der Beladezunge auf den Ladestapel geladen wird, die nächste Packeinheit mit dem Rechen 55 schon auf die Ladeplatte 52 geschoben, dann in Darstellung 7., 8. Und 9. Mit der Verschiebeeinrichtung 9 in die richtige Position in x-Richtung verschoben und in Darstellung 10. Durch die Abstreifer 57 ergriffen.

Die einzelnen Tablare und Packeinheiten folgen mit einem solchen Abstand hintereinander, daß die einzelnen Bewegungen jeweils entkoppelt und unabhängig voneinander ausgeführt werden können.

Die Sequenz von Fig. 12 zeigt die Funktionsweise der erfindungsgemäßen Beladevorrichtung in Seitenansicht. Dabei ist die Paletten-Hubeinrichtung 61 zu erwähnen, die die Positionierung einer Packeinheit im Ladestapel in y-Richtung durch Anheben bzw. Absenken des Ladungsträgers durchführt. Gut zu erkennen ist in Fig. 12 ebenfalls, wie in Fig. 12a), 12b), 12c) die Packeinheit 15 ("Carton") durch Beladezunge 56 und Abstreifer 57 an die richtige Tiefenposition auf dem Beladungsstapel transportiert wird. In dem in Fig. 12d) gezeigten Verfahrensschritt ist die Beladezunge 56 bereits zurückgezogen und die Packeinheit wird nur noch durch den Abstreifer 57 in Position gehalten, der sich in Fig. 12e) ebenfalls zurückzieht, um die nächste Packeinheit ergreifen zu können.

Ebenfalls vorgesehen ist bei dem gezeigten Ausführungsbeispiel eine Abtasteinrichtung 65, beispielsweise in Form eines Laser-Abtasters zur Erfassung der aktuellen Höhe des Beladestapels und zur Überprüfung, ob der Beladungsvorgang den berechneten Vorgaben entspricht. Vorzugsweise ist die Abtasteinrichtung 65 beweglich angeordnet.

Den Fig. 10 bis 12 außerdem entnehmbar ist die Ladehilfe oder Schlichtcontainer 60, die den sich bildenden Ladestapel 21 von drei Seiten umgibt und so als Abstützfläche für eine Schiebebewegung der Packeinheiten in Horizontalrichtung dienen kann.

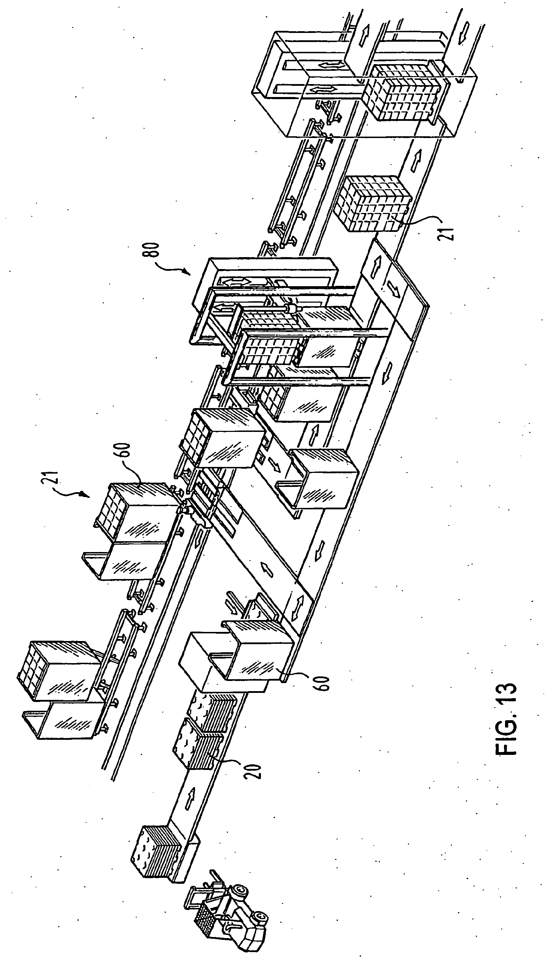

Sobald ein Ladungsträger mit einem Ladestapel 21 vollständig beladen ist, tauscht eine Ladungsträger-Wechseleinrichtung 58 den gefüllten Ladungsträger durch einen neuen, leeren Ladungsträger aus (Fig. 13). Der gefüllte Ladungsträger gelangt, wie ebenfalls in Fig. 13 gezeigt ist, zu einer Folienwickelmaschine 80, in der der beladene Ladungsträger 20 aus der Ladehilfe 60 herausgehoben wird und gleichzeitig mit einer Folie zur Stabilisierung des Ladestapels umwickelt wird. Der umwickelte Ladestapel gelangt dann über einen Aufzug oder dergleichen zu einer Laderampe für die LKW-Verladung, während die leere Ladehilfe mit einer Palette versehen wird und dann wieder der Beladevorrichtung zugeführt wird.

Die Erfindung ermöglicht eine automatisierte und mechanisierte Durchführung praktisch aller in dem Lagersystem ausgeführten Vorgänge, einschließlich der Kommissionierung, so daß durch die Erfindung eine deutliche Steigerung der Wirtschaftlichkeit des Lager- und Kommissioniersystems erreicht werden kann. Zusätzlich ist es im Rahmen der Erfindung möglich, auch den Entladevorgang der angelieferten Eingangspaletten aus den Lieferanten-LKW und die Verladung der beladenen Auftragspaletten in Ausliefer-LKW zu automatisieren.

### Bezugszeichenliste

- 10: Tablar
- 11: Tablaröffnungen
- 12: Rand
- 15: Packeinheit, Karton
- 20: Ladungsträger, Auftragspalette
- 21: Ladestapel
- 41: Einlagerbahnen
- 42: Auslagerbahnen
- 45: Sortiereinrichtung/Überholeinrichtung
- 47: Aufzug
- 48: Drehvorrichtung
- 50: Palettenbelademaschine, COM
- 51: Tablarförderer
- 52: Ladeplatte
- 53: Verschiebeeinrichtung, Pusher
- 54: Hubstifte
- 55: Rechen
- 56: Beladezunge
- 57: Abstreifer
- 58: Ladungsträger-Wechsler
- 60: Ladehilfe
- 61: Paletten-Hubeinrichtung
- 62: Tablar-Rückförderer
- 65: Abtasteinrichtung
- 70: Tablar-Rütteleinrichtung
- 71: Kippauflage
- 72: Hubkolben
- 73: Auflageplatte
- 80: Folienwickelmaschine
- 85: Packeinheit-Kippeinrichtung
- 100: Palettenlager
- 101: Lagerregale
- 103: Regalgassen
- 105: Depalettiereinrichtung
- 110: Anlieferung
- 120: Funktionsbereich
- 130: Tablarlager
- 131: Lagerregale
- 133: Regalgassen
- 135: Tablarlager-Regalfahrzeuge
- 140: Verladung
- 141: LKW-Rampen
- 200: LKW

## Patentansprüche

1. Regallager (130) zur Lagerung von Artikeln mit Lagerregalen (131) zur Lagerung von Tablaren (10), auf denen die Artikel (15) liegen, **dadurch gekennzeichnet, daβ** die Tablare (10) jeweils Öffnungen (11) aufweisen zur Entnahme des auf dem Tablar (10) liegenden Artikels (15) mittels durch die Öffnungen (11) durchgreifenden Hubmitteln.

2. Regallager nach Anspruch 1, wobei auf jedem Tablar (10) jeweils ein Artikel gelagert ist.

3. Regallager nach Anspruch 1 oder 2, wobei die Lagerregale (131) zur Lagerung von Tablaren (10) mit mehreren vordefinierten Abmessungen ausgebildet sind.

4. Regallager nach einem der Ansprüche 1 bis 3, aufweisend Regalfahrzeuge (135) zur automatischen selektiven Entnahme einzelner Tablare (10).

5. Regallager nach einem der Ansprüche 1 bis 4, aufweisend eine Hubeinrichtung mit Hubmitteln (54) zur Entnahme eines Artikels (15) von dem Tablar (10).

6. Automatisiertes Lagersystem zum Lagern und Kommissionieren von Artikeln, mit einem Regallager nach Anspruch 1 und
einer Einrichtung (105) zur Vereinzelung von angelieferten Artikeln in Packeinheiten (15) und zum Umlagern auf Tablare (10),
einer Entnahme-Fördertechnik (42, 45, 135) zur Entnahme und zur für die Beladung auf Auftrags-Ladungsträger sequenzierten Bereitstellung der Packeinheiten (15), und
einer Beladestation (140) zum Laden der Packeinheiten (15) auf die Auftrags-Ladungsträger in einer definierten Beladesequenz

7. Lagersystem nach Anspruch 1, wobei im Tablarlager (130) auf jedem Tablar (10) eine Packeinheit (15) liegt.

8. Lagersystem nach einem der Ansprüche 6 oder 7, aufweisend ein Palettenlager (100) zum Lagern der Artikel auf Eingangs-Ladungsträgern.

9. Lagersystem nach einem der Ansprüche 6 bis 8, wobei die Entnahme-Fördertechnik eine Sortiereinrichtung (45) für Tablare (10) aufweist.

10. Lagersystem nach einem der Ansprüche 6 bis 9, wobei die Entnahme-Fördertechnik rechnergesteuerte Entnahme-Regalfahrzeuge (135) umfaßt.

11. Lagersystem nach einem der Ansprüche 6 bis 10, wobei das Tablarlager (130) zur Lagerung von Tablaren mit mehreren definierten Abmessungen ausgebildet ist.

12. Lagersystem nach einem der Ansprüche 6 bis 11, wobei die Beladestation (140) wenigstens eine Belademaschine (50) zur automatisierten Beladung der Auftrags-Ladungsträger (20) mit den Packeinheiten (15) aufweist.

13. Lagersystem nach Anspruch 12, wobei jeder Beladungsmaschine (50) mehrere, vorzugsweise vier, Auslagerbahnen (42) der Entnahme-Fördertechnik zugeordnet sind.

14. Lagersystem nach Anspruch 12 oder 13, aufweisend eine Drehvorrichtung (48) zum Drehen der Tablare (10) und darauf liegenden Packeinheiten (15) in eine definierte Position zur Zuführung zur Belademaschine (50).

15. Lagersystem nach einem der Ansprüche 6 bis 14, aufweisend eine Tablar-Rütteleinrichtung (70) zur definierten Positionierung einer Packeinheit (15) auf dem Tablar (10).

16. Lagersystem nach einem der Ansprüche 6 bis 15, aufweisend eine Packeinheit-Kippeinrichtung (85) zum Kippen einer Packeinheit (15) und zum Ablegen der gekippten Packeinheit auf dem Tablar (10).

17. Lagersystem nach einem der Ansprüche 6 bis 16, aufweisend eine Ladungsträger-Kippeinrichtung zum Kippen von Ladungsträgern zur Beladung seitlich umschlossener Ladungsträger.

18. Lagersystem nach einem der Ansprüche 6 bis 17, wobei das Tablarlager (130) Lagermodule zur Zusammenfassung der Packeinheiten (15) zu Artikelgruppen aufweist.

19. Verfahren zum Lagern und Kommissionieren von Artikeln in einem Lager, aufweisend die Schritte:
(a) Vereinzelung der gelagerten Artikel in Packeinheiten (15),
(b) Umladen der Packeinheiten (15) auf Tablare (10),
(c) Lagerung der auf den Tablaren (10) liegenden Packeinheiten (15) in einem als Puffer dienenden Tablarlager (130),
(d) Erfassung eines Kommissionierauftrags und der zur Abwicklung dieses benötigten Packeinheiten (15),
(e) Auslagerung der für den Kommissionierauftrag benötigten Packeinheiten (15) aus dem Tablarlager(130),
(f) Sortieren der Packeinheiten in eine definierte Sequenz, und
(g) Umladen der Packeinheiten (15) auf Auftrags-Ladungsträger (20) in einer durch die definierte Sequenz bestimmten Beladereihenfolge, **dadurch gekennzeichnet, dass** zur Lagerung im Tablarlager (130) Tablare (10) mit Durchgriffsöffnungen (11) verwendet werden.

20. Verfahren nach Anspruch 19, wobei auf jedem Tablar (10) jeweils eine Packeinheit (15) gelagert wird.

21. Verfahren nach Anspruch 19 oder 20, wobei zur Lagerung Tablare (10) mehrerer vordefinierter Abmessungen verwendet werden.

22. Verfahren nach Anspruch 19, 20 oder 21, wobei der Schritt (g) das Anheben einer Packeinheit (15) von dem Tablar (10) mittels durch die Durchgriffsöffnungen durchgreifende Hubmittel (54) umfaßt.

23. Verfahren nach einem der Ansprüche 19 bis 22, wobei die Packeinheiten in den Verfahrensschritten (c) bis (g) stets von unten her unterstützt werden.

24. Verfahren nach einem der Ansprüche 19 bis 23, wobei Verfahrensschritt (g) vollautomatisch ausgeführt wird.

25. Verfahren nach Anspruch 24, wobei die Verfahrensschritte (a) bis (f) ebenfalls vollautomatisch ausgeführt werden.

26. Verfahren nach einem der Ansprüche 19 bis 25, ferner aufweisend den Verfahrensschritt (h) Umwicklung des in Schritt (g) auf dem Auftrags-Ladungsträger (20) gebildeten Ladungsstapels (21) mit einer Sicherungsmitteln.

27. Verfahren nach einem der Ansprüche 19 bis 26, wobei zur Beladung des Auftrags-Ladungsträgers eine Ladehilfe (60) verwendet wird.

28. Verfahren nach einem der Ansprüche 19 bis 26, umfassend den Schritt des Kippens eines seitlich umschlossenen Auftrags-Ladungsträgers zur Beladung durch die Packeinheiten.

## Claims

1. Rack storage facility (130) for storing articles, comprising storage racks (131) for storing trays (10) that carry the articles (15), **characterised in that** the trays (10) have in each case openings (11) for removal of the article (15) lying on the tray (10) by means of lifting means that engage through the openings (11).

2. Rack storage facility according to claim 1, wherein in each case one article is stored on each tray (10).

3. Rack storage facility according to claim 1 or 2, wherein the storage racks (131) are designed to store trays (10) having a plurality of predefined dimensions.

4. Rack storage facility according to one of claims 1 to 3, having rack-mounted storage/retrieval machines (135) for the automated selective removal of individual trays (10) .

5. Rack storage facility according to one of claims 1 to 4, having a lifting device with lifting means (54) for the removal of an article (15) from the tray (10).

6. Automated storage system for storing and picking articles, with a rack-type storage system according to claim 1 and a device (105) for separating delivered articles into packing units (15) and transferring the latter onto trays (10),
a take-off conveying system (42, 45, 135) for removing and feeding the packing units (15) in sequence for loading onto order load carriers, and
a loading station (140) for loading the packing units (15) in a defined loading sequence onto the order load carriers.

7. Storage system according to claim 1, wherein in the tray storage facility (130) one packing unit (15) is situated on each tray (10).

8. Storage system according to claim 6 or 7, having a pallet storage facility (100) for storing the articles on incoming load carriers.

9. Storage system according to one of claims 6 to 8, wherein the take-off conveying system has a sorting device (45) for trays (10).

10. Storage system according to one of claims 6 to 9, wherein the take-off conveying system comprises computer-controlled rack-mounted take-off machines (135).

11. Storage system according to one of claims 6 to 10, wherein the tray storage facility (130) is designed for storing trays with a plurality of defined dimensions.

12. Storage system according to one of claims 6 to 11, wherein the loading station (140) has at least one loading machine (50) for automated loading of the order load carriers (20) with the packing units (15).

13. Storage system according to claim 12, wherein a plurality of, preferably four, retrieval paths (42) of the take-off conveying system are associated with each loading machine (50).

14. Storage system according to claim 12 or 13, having a rotary apparatus (48) for rotating the trays (10) and packing units(15) situated thereon into a defined position for feeding to the loading machine (50).

15. Storage system according to one of claims 6 to 14, having a tray-vibrating device (70) for the defined positioning of a packing unit (15) on the tray (10).

16. Storage system according to one of claims 6 to 15, having a packing unit tilting device (85) for tilting a packing unit (15) and for depositing the tilted packing unit on the tray (10).

17. Storage system according one of claims 6 to 16, having a load carrier tilting device for tilting load carriers for the purpose of loading laterally enclosed load carriers.

18. Storage system according to one of claims 6 to 17, wherein the tray storage facility (130) has storage modules for collating the packing units (15) into article groups.

19. Method of storing and picking articles in a storage facility, comprising the steps:
(a) separation of the stored articles into packing units (15),
(b) transfer of the packing units (15) onto trays (10)
(c) storage of the packing units (15) lying on the trays (10) in a tray storage facility (130) used as a buffer,
(d) logging of a pick order and of the packing units (15) required to complete said order,
(e) retrieval of the packing units (15) needed for the pick order from the tray storage facility (130),
(f) sorting of the packing units into a defined sequence, and
(g) transfer of the packing units (15) onto order load carriers (20) in a loading order determined by the defined sequence,
**characterised in that** trays (10) with engagement openings (11) are used for storage in the tray storage facility (130).

20. Method according to claim 19, wherein in each case one packing unit (15) is stored on each tray (10).

21. Method according to claim 19 or 20, wherein trays (10) having a plurality of predefined dimensions are used for storage.

22. Method according to claim 19, 20 or 21, wherein the step (g) comprises the lifting of a packing unit (15) from the tray (10) by lifting means (54), which engage through the openings.

23. Method according to one of claims 19 to 22, wherein the packing units are supported from below throughout the method steps (c) to (g).

24. Method according to one of claims 19 to 23, wherein method step (g) is effected fully automatically.

25. Method according to claim 24, wherein the method steps (a) to (f) are likewise effected fully automatically.

26. Method according to one of claims 19 to 25, further comprising the method step (h) of wrapping protective means around the load stack (21) formed on the order load carrier (20) in step (g).

27. Method according to one of claims 19 to 26, wherein a loading aid (60) is used to load the order load carrier.

28. Method according to one of claims 19 to 26, comprising the step of tilting a laterally enclosed order load carrier for the purpose of loading with the packing units.

## Revendications

1. Stockage en étagères (130) pour le stockage d'articles avec des étagères de stockage (131) pour le stockage de rayons (10) sur lesquels les articles (15) reposent, **caractérisé en ce que** les rayons (10) présentent chacun des ouvertures (11) pour retirer l'article (15) reposant sur le rayon (10) via des moyens de levage s'engageant à travers les ouvertures (11).

2. Stockage en étagères selon la revendication 1, un article étant respectivement stocké sur chaque rayon (10).

3. Stockage en étagères selon la revendication 1 ou 2, les étagères de stockage (131) étant formées avec plusieurs dimensions prédéfinies pour le stockage de rayons (10).

4. Stockage en étagères selon l'une quelconque des revendications 1 à 3 présentant des véhicules d'étagères (135) pour le retrait sélectif automatique des différents rayons (10).

5. Stockage en étagères selon l'une quelconque des revendications 1 à 4 présentant un dispositif de levage avec des moyens de levage (54) pour le retrait d'un article (15) du rayon (10).

6. Système de stockage automatisé pour le stockage et la préparation d'articles avec un stockage en étagères selon la revendication 1 et un dispositif (105) pour isoler les articles livrés dans différentes unités de conditionnement (15) et pour les déplacer sur des rayons (10), une technique de retrait-fourniture (42, 45, 135) pour le retrait et pour la préparation séquencée des unités de conditionnement (15) pour le chargement sur des porte-charge de commande, et une station de chargement (140) pour charger les unités de conditionnement (15) sur les porte-charge de commande dans une séquence de chargement définie.

7. Système de stockage selon la revendication 1, une unité de conditionnement (15) reposant sur chaque rayon (10) dans le stockage en rayons (130).

8. Système de stockage selon l'une quelconque des revendications 6 ou 7, présentant un stockage en palettes (100) pour le stockage des articles sur des porte-charges d'entrée.

9. Système de stockage selon l'une quelconque des revendications 6 à 8, la technique d'enlèvement-fourniture présentant un dispositif de tri (45) pour des rayons (10).

10. Système de stockage selon l'une quelconque des revendications 6 à 9, la technique d'enlèvement-fourniture comprenant des véhicules d'étagères pour l'enlèvement (135) commandés par ordinateur.

11. Système de stockage selon l'une quelconque des revendications 6 à 10, le stockage en rayons (130) étant conçu avec plusieurs dimensions prédéfinies pour le stockage de rayons.

12. Système de stockage selon l'une quelconque des revendications 6 à 11, la station de chargement (140) présentant au moins une machine de chargement (50) pour le chargement automatique des porte-charge de commande (20) avec les unités de conditionnement (15).

13. Système de stockage selon la revendication 12, plusieurs, de préférence quatre, voies d'évacuation (42) de la technique d'enlèvement-fourniture étant attribuées à chaque machine de chargement (50).

14. Système de stockage selon la revendication 12 ou 13, présentant un dispositif de rotation (48) pour tourner les rayons (10) et les unités de conditionnement (15) reposant dessus dans une position définie pour les amener vers la machine de chargement (50).

15. Système de stockage selon l'une quelconque des revendications 6 à 14, présentant un dispositif de vibrations de rayons (70) pour le positionnement défini d'une unité de conditionnement (15) sur le rayon (10).

16. Système de stockage selon l'une quelconque des revendications 6 à 15, présentant un dispositif de basculement d'unité de conditionnement (85) pour faire basculer une unité de conditionnement (15) et pour déposer l'unité de conditionnement basculée sur le rayon (10).

17. Système de stockage selon l'une quelconque des revendications 6 à 16, présentant un dispositif de basculement de porte-charge pour faire basculer des porte-charge pour le chargement de porte-charge fermés sur les côtés.

18. Système de stockage selon l'une quelconque des revendications 6 à 17, le stockage en rayons (130) présentant des modules de stockage pour regrouper les unités de conditionnement (15) en groupes d'articles.

19. Procédé pour le stockage et la préparation d'articles dans un entrepôt, présentant les étapes :
(a) isolement des articles stockés dans des unités de conditionnement (15),
(b) déplacement des unités de conditionnement (15) sur des rayons (10),
(c) stockage des unités de conditionnement (15) reposant sur les rayons (10) dans un stockage en rayons (130) servant de tampon,
(d) enregistrement du bon de préparation d'une commande et des unités de conditionnement (15) nécessaires à la réalisation de celle-ci,
(e) déplacement des unités de conditionnement (15) nécessaires à la préparation de la commande depuis le stockage en rayons (130),
(f) tri des unités de conditionnement (15) dans une séquence définie et
(g) déplacement des unités de conditionnement (15) sur des porte-charge de commande (20) dans un ordre de chargement déterminé par la séquence définie, **caractérisé en que** pour le stockage dans le stockage en rayons (130), des rayons (10) avec des ouvertures d'engagement (11) sont employés.

20. Procédé selon la revendication 19, une unité de conditionnement (15) étant respectivement stockée sur chaque rayon (10).

21. Procédé selon la revendication 19 ou 20, des rayons (10) avec plusieurs dimensions prédéfinies étant employés pour le stockage.

22. Procédé selon la revendication 19, 20 ou 21, l'étape (g) comprenant le levage d'une unité de conditionnement (15) depuis le rayon (10) via les moyens de levage (54) s'engageant à travers les ouvertures d'engagement.

23. Procédé selon l'une quelconque des revendications 19 à 22, les unités de conditionnement (15) étant constamment supportées par le dessous dans les étapes de procédé (c) à (g).

24. Procédé selon l'une quelconque des revendications 19 à 23, l'étape du procédé (g) étant entièrement réalisée automatiquement.

25. Procédé selon la revendication 24, les étapes du procédé (a) à (f) étant également entièrement réalisées automatiquement.

26. Procédé selon l'une quelconque des revendications 19 à 25, présentant en outre l'étape du procédé (h) d'enrouler la pile de chargement (21) formée sur le porte-charge de commande (20) à l'étape (g) avec un moyen de sécurité.

27. Procédé selon l'une quelconque des revendications 19 à 26, une aide au chargement (60) étant utilisée pour charger le porte-charge de commande.

28. Procédé selon l'une quelconque des revendications 19 à 26, comprenant l'étape du basculement d'un porte-charge de commande entouré sur les côtés pour le chargement par les unités de conditionnement.
